(19) Europäisches Patentamt
European Patent Office
Office européen des brevets

(11) Veröffentlichungsnummer: **0 202 492**
**B1**

(12) **EUROPÄISCHE PATENTSCHRIFT**

(45) Veröffentlichungstag der Patentschrift: **26.10.88**

(51) Int. Cl.[4]: **C 07 F 9/38**

(21) Anmeldenummer: **86105596.0**

(22) Anmeldetag: **23.04.86**

(54) **Phenyl-tetralindiphosphonsäuren sowie ein Verfahren zu ihrer Herstellung.**

(30) Priorität: **18.05.85 DE 3517969**

(43) Veröffentlichungstag der Anmeldung: **26.11.86 Patentblatt 86/48**

(45) Bekanntmachung des Hinweises auf die Patenterteilung: **26.10.88 Patentblatt 88/43**

(84) Benannte Vertragsstaaten: **BE CH DE FR GB IT LI NL**

(56) Entgegenhaltungen:
**CHEMICAL ABSTRACTS, Band 90, Nr. 26, 25. Juni 1979, Seite 9, Nr. 204644f, Columbus, Ohio, US; A.B. ALOVITDINOV et al.: "Polymerization of 1-phenylvinylphosphonic acid in a melt", & IZV. VYSSH. UCHEBN. ZAVED., KHIM. KHIM. TEKHNOL. 1979, 22(3), 360-3**

(73) Patentinhaber: **HOECHST AKTIENGESELLSCHAFT, Postfach 80 03 20, D-6230 Frankfurt am Main 80 (DE)**

(72) Erfinder: **Pieper, Werner, Dr., Am Käferbruch 14, D-5014 Kerpen (DE)**

**EP 0 202 492 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft die bisher unbekannten diastereomeren Verbindungen α- und β-1-Phenyltetralin-1,4-diphosphonsäure sowie ein Verfahren zur Herstellung dieser Verbindungen.

1-Phenylvinyl-1-phosphonsäure ist durch Umsetzung von Acetophenon mit Tetraphosphorhexoxid (DE-A-3 125 329) oder Phosphortrichlorid (DE-A-3 323 392) leicht zugänglich.

Aus Vysokomolekul, Soedin. 7 (12), 2160 (1965) ist bekannt, dass mit den üblichen Radikalinitiatoren eine Homopolymerisation von 1-Phenylvinyl-1-phosphonsäure nicht erreicht werden kann.

In Izv. Vyssh. Uchebn. Zaved., Khim. Khim. Tekhnol. 22 (3) 360 (1979) wurde dagegen beschrieben, dass 1-Phenylvinyl-1-phosphonsäure in Gegenwart von Dicumylperoxid bei 125-145°C zu einer entsprechenden Polyphosphonsäure polymerisierbar ist.

Überraschenderweise wurde nun gefunden, dass man durch Erhitzen von 1-Phenylvinyl-1-phosphonsäure auf 120 bis 210°C, vorzugsweise auf 140 bis 190°C, 1-Phenyltetralin-1,4-diphosphonsäuren in Form eines Gemisches zweier Diastereomerer erhält.

Eine Trennung dieses Gemisches lässt sich leicht durchführen, indem man das Umsetzungsprodukt in Wasser suspendiert, wobei β-1-Phenyltetralin-1,4-diphosphonsäure in Lösung geht und man aus der Suspension α-1-Phenyltetralin-1,4-diphosphonsäure in Form des verbleibenden kristallinen Feststoffes von der entstandenen Lösung abtrennt.

Aus der entstandenen und abgetrennten wässrigen Lösung von β-1-Phenyltetralin-1,4-diphosphonsäure kann dann — nachdem man die Lösung eingedampft und mit Methanol aufgenommen hat — β-1-Phenyltetralin-1,4-diphosphonsäure gewonnen werden, indem man den dabei erhaltenen kristallinen Niederschlag von der gebildeten Mutterlauge abtrennt.

Man kann jedoch auch umgekehrt verfahren, indem man das Umsetzungsprodukt in Methanol suspensiert, wobei α-1-Phenyltetralin-1,4-diphosphonsäure in Lösung geht und man aus der Suspension β-1-Phenyltetralin-1,4-diphosphonsäure in Form des verbleibenden kristallinen Feststoffes von der entstandenen Lösung abtrennt. Aus letzterer lässt sich dann entsprechend α-1-Phenyltetralin-1,4-diphosphonsäure gewinnen indem man die methanolische Lösung eindampft und mit Wasser aufnimmt.

Die Dauer der Erhitzung der Ausgangssubstanz beträgt im allgemeinen 1 bis 30 Stunden und richtet sich nach der gewählten Erhitzungstemperatur.

1-Phenyltetralin-1,4-diphosphonsäuren eignen sich für die Nachbehandlung phosphatisierter Metalloberflächen.

Die Herstellung der neuen Verbindungen sei anhand des folgenden Beispiels näher erläutert.

*Beispiel*

150 g 1-Phenylvinyl-1-phosphonsäure werden 6 h auf 180°C erhitzt. Die erhaltene Schmelze besteht laut $^{31}$P-NMR aus zwei diastereomeren Verbindungen, der α- und β-1-Phenyltetralin-1,4-diphosphonsäure im Isomerenverhältnis α:β = 2:1. Das Produkt wird in 200 ml Wasser aufgenommen und aus der erhaltenen Suspension der Feststoff abfiltriert.

88 g α-1-Phenyltetralin-1,4-diphosphonsäure werden in spektroskopisch reiner Form isoliert. ($^{31}$P-NMR-Spektrum (Methanol): AB-System mit $\delta_A$ = 27,4 ppm, $\delta_B$ = 26,9 ppm, $J_{AB}$ = 4,9 Hz).

Die eingeengte Mutterlauge wird in Methanol aufgenommen, 25 g β-1-Phenyltetralin-1,4-diphosphonsäure kristallisieren in spektroskopisch reiner Form aus und werden abfiltriert ($^{31}$P-NMR-Spektrum (Methanol): AB-System mit $\delta_A$ = 26,8 ppm, $\delta_B$ = 26,3 ppm, $J_{AB}$ = 3,0 Hz), während die zurückbleibende Mutterlauge die restliche Menge eines Gemisches beider Isomeren enthält.

**Patentansprüche**

1. 1-Phenyltetralin-1,4-diphosphonsäuren der Formel

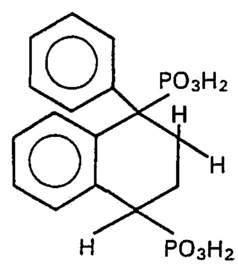

2. Verfahren zur Herstellung von 1-Phenyltetralin-1,4-diphosphonsäuren nach Anspruch 1, dadurch gekennzeichnet, dass man 1-Phenylvinyl-1-phosphonsäure bei Temperaturen von 120 bis 210°C umsetzt.

3. Verfahren nach Anspruch 2, dadurch gekennzeichnet, dass man die Umsetzung bei Temperaturen zwischen 140 und 190°C durchführt.

4. Verfahren nach Anspruch 2 oder 3, dadurch gekennzeichnet, dass man das Umsetzungsprodukt in Wasser suspensiert, wobei β-1-Phenyltetralin-1,4-diphosphonsäure in Lösung geht, und man aus der Suspension α-1-Phenyltetralin-1,4-diphosphonsäure in Form des verbleibenden kristallinen Feststoffes von der entstandenen Lösung abtrennt.

5. Verfahren nach Anspruch 4, dadurch gekennzeichnet, dass man die entstandene und abgetrennte wässrige Lösung von β-1-Phenyltetralin-1,4-diphosphonsäure eindampft, dann mit Methanol aufnimmt und die β-1-Phenyltetralin-1,4-diphosphonsäure gewinnt, indem man den dabei erhaltenen kristallinen Niederschlag von der gebildeten Mutterlauge abtrennt.

6. Verfahren nach Anspruch 2 oder 3, dadurch gekennzeichnet, dass man das Umsetzungsprodukt in Methanol suspendiert, wobei α-1-Phenyltetralin-1,4-diphosphonsäure in Lösung geht und aus der Suspension β-1-Phenyltetralin-1,4-diphosphonsäure in Form des verbleibenden kristallinen Feststoffes von der entstandenen Lösung abtrennt.

**Claims**

1. 1-Phenyltetraline-1,4-diphosphonic acids of the formula

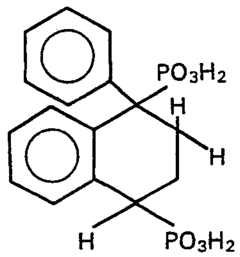

2. A process for the preparation of 1-phenyltetraline-1,4-diphosphonic acids as claimed in claim 1, which comprises reacting 1-phenylvinyl-1-phosphonic acid at temperatures of 120 to 210°C.

3. The process as claimed in claim 2, wherein the reaction is carried out at temperatures between 140 and 190°C.

4. The process as claimed in claim 2 or 3, wherein the reaction product is suspended in water, β-1-phenyltetraline-1,4-diphosphonic acid going into solution, and α-1-phenyltetraline-1,4-diphosphonic acid is separated off from the suspension in the form of the remaining crystalline solid from the resulting solution.

5. The process as claimed in claim 4, wherein the resulting aqueous solution of β-1-phenyltetraline-1,4-diphosphonic acid which is separated off is evaporated, the residue is then taken up in methanol and the β-1-phenyltetraline-1,4-diphosphonic acid is recovered by separating off the resulting crystalline precipitate from the mother liquor formed.

6. The process as claimed in claim 2 or 3, wherein the reaction product is suspended in methanol, α-1-phenyltetraline-1,4-diphosphonic acid going into solution, and β-1-phenyltetraline-1,4-diphosphonic acid is separated off from the suspension in the form of the remaining crystalline solid from the resulting solution.

**Revendications**

1. Les acides 1-phényltétraline-1,4-diphosphoniques de formule:

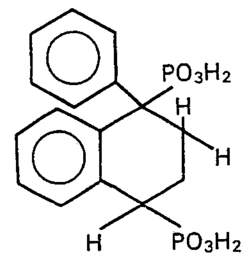

2. Procédé pour la fabrication des acides 1-phényltétraline-1,4-diphosphoniques selon la revendication 1, caractérisé en ce que l'on fait réagir l'acide 1-phénylvinyl-1-phosphonique à des températures de 120 à 210°C.

3. Procédé selon la revendication 2, caractérisé en ce que l'on effectue la réaction à des températures comprises entre 140 et 190°C.

4. Procédé selon la revendication 2 ou 3, caractérisé en ce que l'on met le produit de réaction en suspension dans l'eau, l'acide β-1-phényltétraline-1,4-diphosphonique passant en solution, et on sépare à partir de la suspension l'acide α1-phényltétraline-1,4-diphosphonique sous forme du solide cristallisé restant de la solution formée.

5. Procédé selon la revendication 4, caractérisé en ce que l'on évapore la solution aqueuse d'acide β-1-phényltétraline-1,4-diphosphonique formée et séparée, ensuite on reprend par le méthanol et on récupère l'acide β-1-phényltétraline-1,4-diphosphonique, en séparant le précipité cristallisé ainsi obtenu de la liqueur mère formée.

6. Procédé selon la revendication 2 ou 3, caractérisé en ce que l'on met le produit de réaction en suspension dans le méthanol, l'acide α-1-phényltétraline-1,4-diphosphonique passant en solution, et on sépare à partir de la suspension l'acide β-1-phényltétraline-1,4-diphosphonique sous forme du solide cristallisé restant de la solution formée.